# EUROPEAN PATENT APPLICATION

(11) **EP 4 670 990 A1**
(43) Date of publication of application: **31.12.2025**
(21) Application number: 25184426.2
(22) Date of filing: 23.06.2025
(51) Int. Cl.: B41J 3/407, B41J 2/32, B41J 3/44, B41J 11/00, B41J 25/312, B41J 29/02, G01G 19/40

(54) **PRINTER, FOOD PRODUCT SCALE AND ASSOCIATED PRINTHEAD ASSEMBLY**

(30) Priority: 27.06.2024 US 202418756963
(71) Applicant: Illinois Tool Works Inc., Glenview IL 60025 (US)
(72) Inventor: KNOBLAUCH, Austin, Glenview, 60025 (US); REDMAN, Randall L., Glenview, 60025 (US); HOLMES, Robert Andrew, Glenview, 60025 (US); TAYLOR, Ian D., Glenview, 60025 (US)
(74) Representative: HGF

(57) **Abstract**

A printer includes a media path along which a media is movable, and a printhead assembly positioned along the media path at a first side of the media path, wherein the printhead assembly includes a printhead unit. A print roller is positioned along the media path at a second side of the media path such that media passes between the printhead assembly and the print roller. A biasing assembly is arranged for biasing the printhead unit toward the print roller, wherein the biasing assembly includes a biasing component that is movable in a direction across a width of the media path in order to laterally shift a zone of biasing pressure that urges the printhead unit toward the print roller as needed to accommodate media of different widths.

## Description

### TECHNICAL FIELD

This application relates generally to scales used for weighing food product in supermarkets, groceries and other stores and printing labels, and, more particularly, to a scale type printer including a printhead assembly with a printhead that is biased toward a print roller.

### BACKGROUND

In typical commercial food product scale applications the scale is used to weigh food products and determines prices for the food products, and an associated printer prints a label for application to the food product. An operator enters a product number, such as a PLU (price look-up) number, for the product being weighed and the scale accesses its database, or accesses a remote database, for pricing information on the product. The total price for the item is then determined based upon its weight. Price can also be determined based upon item count. In either case, the food product scale typically prints a label with the price and other information for the product.

Different label sizes can be used in the food product scale, which in some cases results in the need to accommodate different label stock widths. Similarly, other printer devices can accommodate different widths of label stock or other media. As used herein, the term printer encompasses both devices that function solely or primarily as printers, as well as other devices that include a printer function but also include other functions in addition to printing, such as a weighing scale that also prints labels. Such scales and other printers can include label stock or other media cassettes that are removable for the purpose of replacing or changing the label stock or other media loaded into the cassette.

In addition, printhead assemblies that have a printhead that is biased toward a print roller are known. In order to achieve high print quality, it is desirable for the biasing to apply even pressure of the printhead on the media moving between the printhead and the print roller. For this purpose, a prior version of a printhead assembly included two springs, located at either end of the printhead, with one spring being located in a rotating ratchet. The rotating ratchet feature would effectively raise or lower the height of the one spring enabling adjustment of the amount of pressure applied. It was determined through testing that the ratcheting mechanism did not have enough travel to create a noticeable difference in pressure, rendering this arrangement ineffective.

It would be desirable to provide a scale (or other printer) with a more effective and user-friendly arrangement for adjusting the printhead bias as needed to accommodate different widths of label stock (or other media).

### SUMMARY

In one aspect, a printer includes a media path along which a media is movable, and a printhead assembly positioned along the media path at a first side of the media path, wherein the printhead assembly includes a printhead unit. A print roller is positioned along the media path at a second side of the media path such that media passes between the printhead assembly and the print roller. A biasing assembly is arranged for biasing the printhead unit toward the print roller, wherein the biasing assembly includes a biasing component that is movable in a direction across a width of the media path in order to laterally shift a zone of biasing pressure that urges the printhead unit toward the print roller as needed to accommodate media of different widths.

In another aspect, a printer includes a media path along which a media is movable, and a printhead assembly positioned along the media path at a first side of the media path. A print roller is positioned along the media path at a second side of the media path such that media passes between the printhead assembly and the print roller. The printhead assembly includes a printhead unit that is biased toward the print roller by at least a first spring member that is movable in a direction across a width of the media path.

The details of one or more embodiments are set forth in the accompanying drawings and the description below. Other features, objects, and advantages will be apparent from the description and drawings, and from the claims.

### BRIEF DESCRIPTION OF THE DRAWINGS

Figs. 1 and 2 show perspective views of a scale;
Fig. 3 shows a perspective view with label cassette removed;
Fig. 4 shows a partial perspective of a printhead region within the cassette receiving station;
Fig. 5 shows a partial perspective view of portions of the printhead region;
Figs. 6-8 show perspective views of the printhead assembly;
Fig. 9 shows a side elevation cross-section view of the printhead assembly;
Fig. 10 shows a front elevation view of the printhead assembly;
Fig. 11 shows a front elevation cross-section view of the printhead assembly;
Fig. 12 shows a perspective cross-section view of part of the printhead assembly;
Fig. 13 shows a perspective view of part of the printhead assembly;
Figs. 14-16 show perspective views of portions of the printhead assembly; and
Figs. 17-19 show partial perspective views of the printhead assembly with the movable biasing component in various set positions.

### DETAILED DESCRIPTION

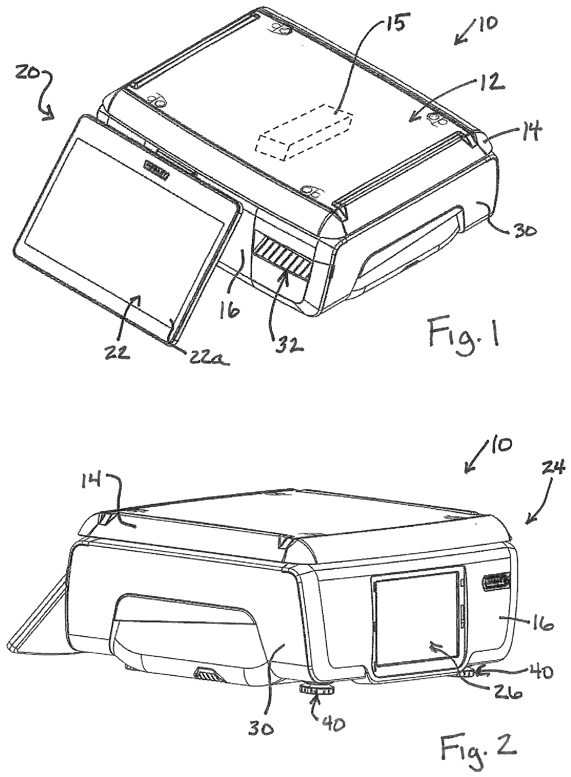

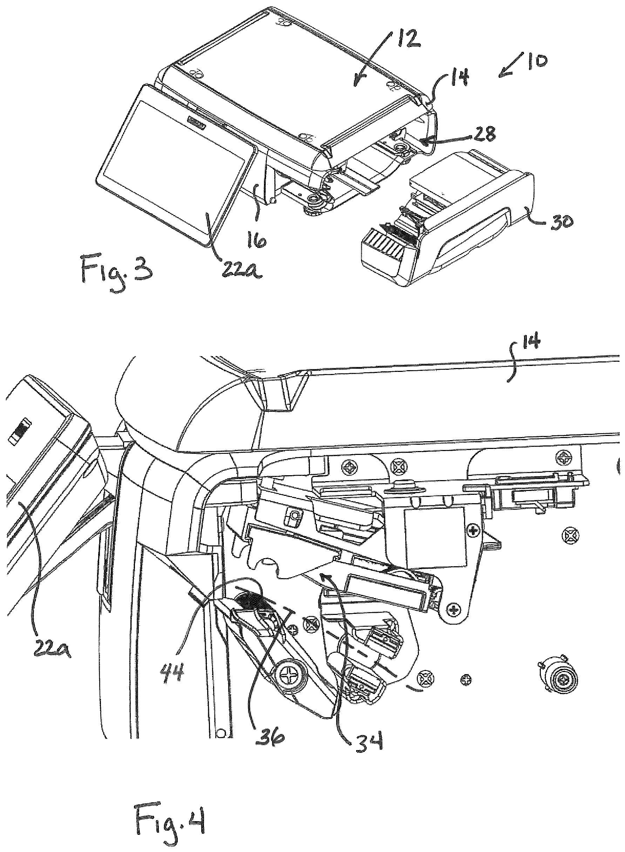

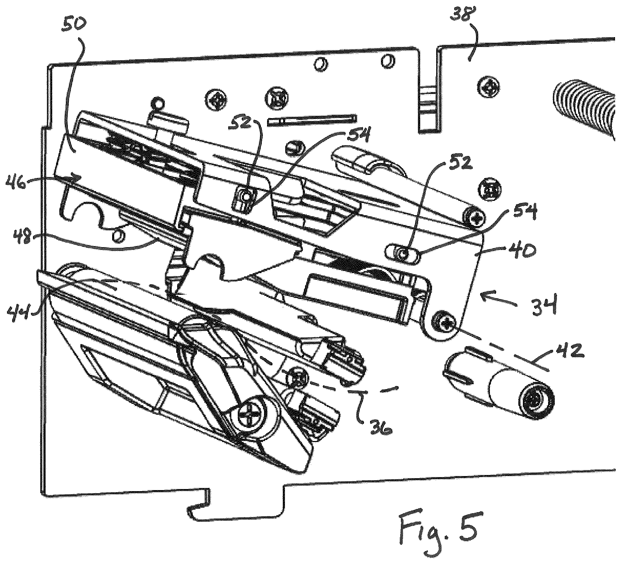

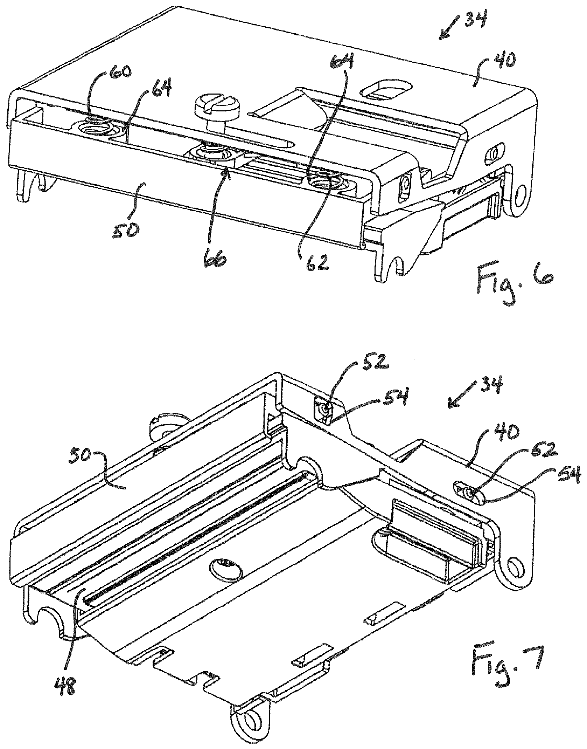

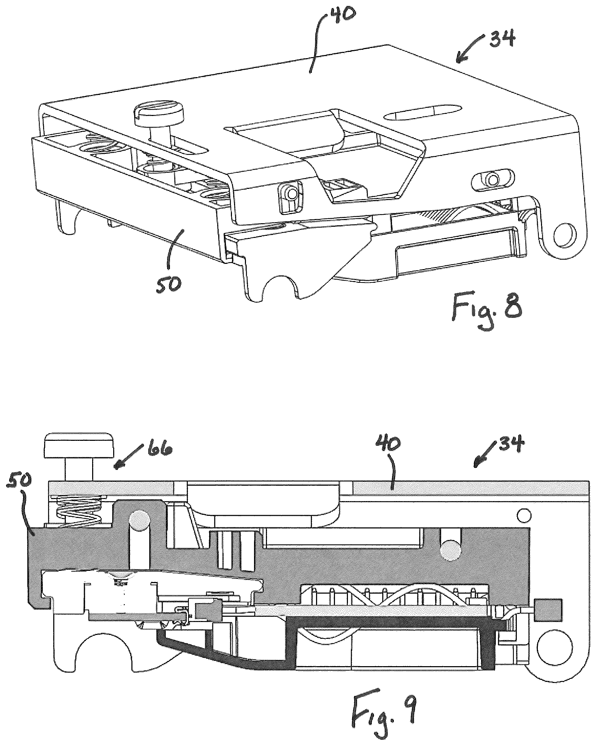

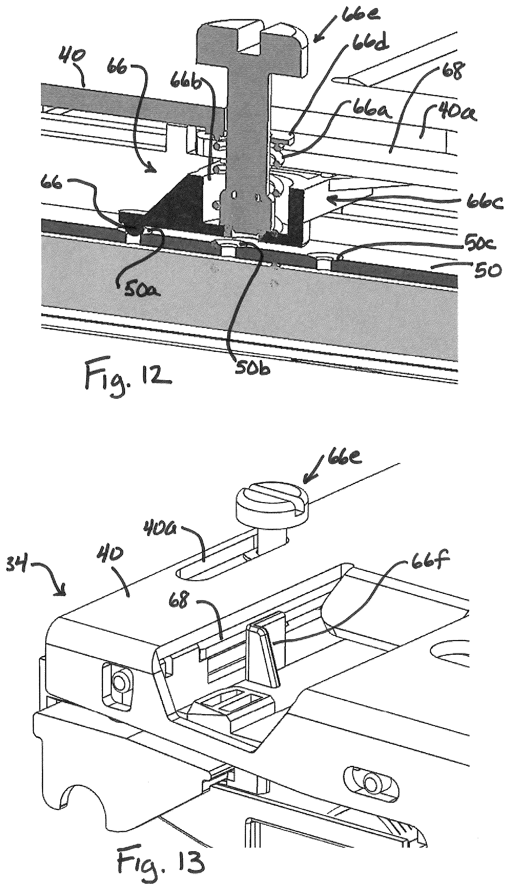

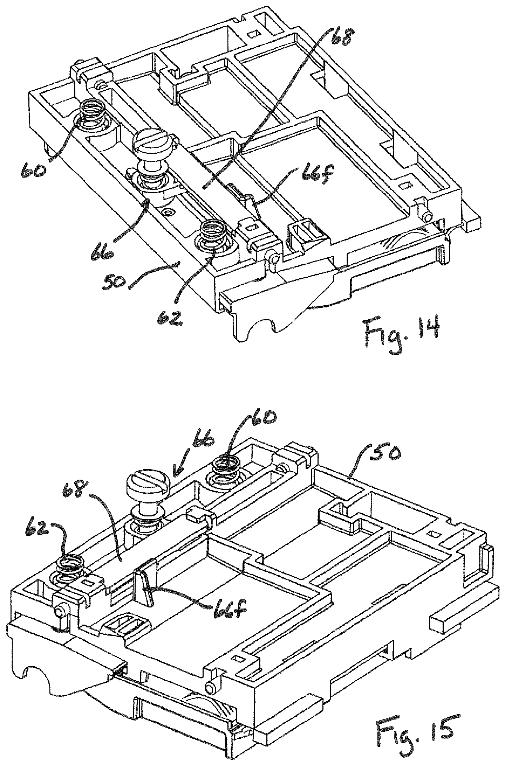

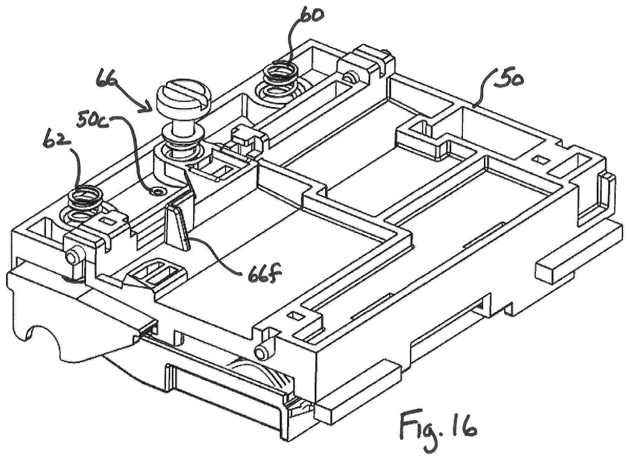

Referring to Figs. 1-19, an exemplary scale configuration is shown. The scale 10 includes a weighing station 12, which in some embodiments may be formed by a weighing platter 14 that can be removed (e.g., for cleaning) from atop the scale body 16. A platter support bracket (not shown) transfers forces to a mechanism, such as a load cell 15 located internal of the scale body 16, for producing weight indicative signals when items are placed on the weighing station. An operator interface side 20 of the scale includes an operator interface 22 configured to display information associated with scale operations. By way of example, the operator interface 22 may be formed by a touch-screen display 22a. A customer interface side 24 of the scale includes a customer interface 26, which in certain embodiments may be formed by any suitable display screen technology.

A side portion of the scale body incudes a cassette station 28 that receives a removable label stock cassette 30 that defines a label exit slot 32. A printhead assembly 34 is located within the scale body along a label stock path 36 and may use any suitable printing technology for printing on labels of a label supply roll loaded in the cassette 30, which printed labels then exit the label exit slot 32 to be applied to products. For example, the printhead assembly may carry a thermal printhead for printing on thermal label stock.

The printhead assembly 34 is pivotably mounted to a wall 38 of the scale body by a support bracket 40 which is capable of rotation about an axis 42. The printhead assembly pivots toward a print roller 44 when the cassette is loaded into the cassette station, placing the label stock between the printhead assembly 34 and the print roller 44 for the purpose of printing. Here, the printhead assembly 34 is located at an upper side of the label stock path 36 and the print roller 44 is located at a lower side of the label stock path 36. The printhead assembly 34 includes a printhead unit 46 that is biased toward the print roller 44 by a biasing assembly, such that a printhead 48 of the printhead unit 46 is applied with pressure against the label stock.

The printhead unit 46 includes a carrier 50 to which the printhead 48 and an associated heat sink are attached, and the carrier 50 is mounted to the support bracket 40 such that the carrier 50 can move slightly relative to the support bracket. Here, for this purpose, pins 52 extending from the carrier 50 pass through slots 54 on the support bracket, allowing the necessary play.

The biasing assembly includes a pair of spring members 60, 62 that are spaced apart in a direction across the width of the label stock path. The spring members 60, 62 have lower ends seated in pockets 64 formed on the carrier 50, and upper ends in contact with a lower surface portion of the support bracket 40. The spring members 60, 62 have positions that are fixed in terms of lateral position relative to the width of the label stock path. The biasing assembly also includes a biasing component 66 that is movable in the direction across the width of the label stock path, per arrow 68, in order to laterally shift a zone of biasing pressure that urges the printhead unit 46 toward the print roller 44 as needed to accommodate label stock of different widths. Here, the biasing component 66 includes a spring member 66a that is carried in a pocket 66b of a carrier 66c, where the carrier 66c is in contact with and slidable over an upper surface portion of the carrier 50. The upper portion of the spring member 66a seats against a washer 66d that is in contact with and slides along the lower surface portion of the support bracket 40, and a fastener screw 66e is threaded to the carrier 66c to hold the spring 66a in place in the pocket 66b. The head of the screw 66e is located above the support bracket 40 and a shaft of the screw extends downward through a guide slot 40a of the support bracket 40. The ends of the slot 40a may act as the limit on lateral movement of the biasing component 66. The biasing component 66, as well as the spring members 60, 62 act to bias the printhead unit 46 away from the support bracket 40 and toward the print roller 44.

The carrier 66c includes an extending finger tab 66f that is accessible from the top of the printhead assembly 34 to enable a user to manually adjust the position of the biasing component 66. The carrier 50 and carrier 66c collectively define detent features that provide for multiple set lateral positions of the carrier 66c, and thus the spring member 66a. Here, the detent features include a downward protrusion 66g of the carrier 66c and a set of spaced apart recesses 50a, 50b and 50c on the upper surface of the carrier 50. The protrusion 66 can seat in any one of the recesses to set the position of the carrier 66c in a relatively stable manner. The detent also provide user feedback of when a desired position of the carrier 66c is achieved. A retainer plate 68 is positioned to hold the carrier 66c adjacent the carrier 50, and the retainer plate overlies part of the carrier for this purpose.

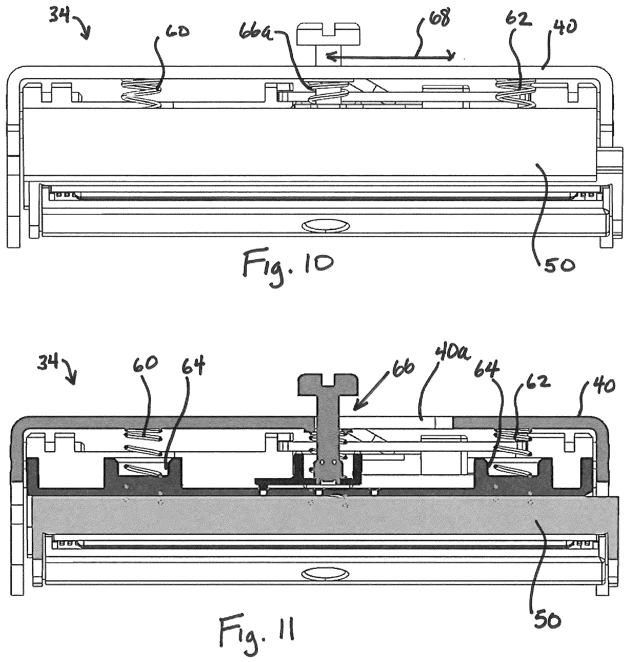

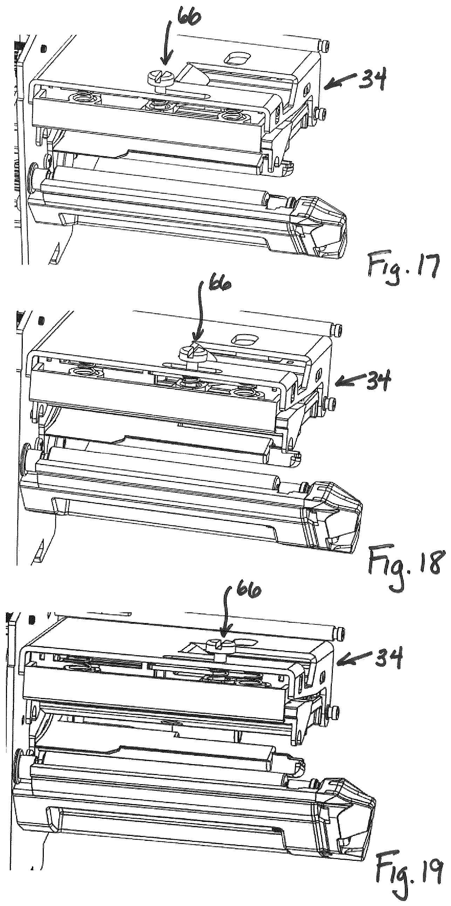

The described printhead assembly and associated printer is versatile and accepts a range of label stock (or other media) widths (such as 38mm, 49mm, 58mm, 72mm and 80mm). All media placed inside of the printer is justified to the right side of the printhead, which here is to the right in the views of Figs. 10 and 11,meaning when a narrower width media is used (e.g., 38mm), the left most edge of the media will only be half way across the width of the printhead. Figs. 17-19 show the three set positions of the movable biasing component 66. When using the wider media (e.g., 80mm) the label spans the entire width of the printhead. In implementations, when using a media with a width of 80mm or 72mm, the biasing component 66 is to be located in the position of Fig. 17. When using a media with an intermediate width (e.g., 58mm), the biasing component 66 is to be located in the position of Fig. 18. When using a media with a narrower width (e.g., 49mm or 38mm), the biasing component 66 is to be located in the position of Fig. 19.

The described mechanism enables adjustment of the lateral location of the pressure applied to the printhead. This will offer better print quality to the labels at their various different widths, as well as reduce wear on the side of the printhead that may not be in contact with the media.

It is to be clearly understood that the above description is intended by way of illustration and example only, is not intended to be taken by way of limitation, and that other changes and modifications are possible. For example, while the above description focuses on a scale with a label printing function, the mechanism could be utilized on printers that do not have a weighing function, and could also be used in connection with media other than label stock.
Certain embodiments of the invention are described in the following clauses:
Clause 1. A printer, comprising:
   a media path along which a media is movable;
   a printhead assembly positioned along the media path at a first side of the media path;
   a print roller positioned along the media path at a second side of the media path such that media passes between the printhead assembly and the print roller;
   wherein the printhead assembly includes a printhead unit that is biased toward the print roller by at least a first spring member that is movable in a direction across a width of the media path.
Clause 2. The printer of clause 1, wherein the printhead assembly includes a support bracket, wherein the printhead unit is mounted to permit at least some relative movement between the printhead unit and the support bracket, wherein the first spring member is positioned to bias the printhead unit away from the support bracket.
Clause 3. The printer of clause 2, further comprising a second spring member positioned to bias the printhead unit away from the support bracket and a third spring member to bias the printhead unit away from the support bracket, wherein the first spring member is disposed laterally between the first spring member and the second spring member, relative to the direction across the width of the media path.
Clause 4. The printer of clause 3, wherein a position of the second spring member is fixed and a position of the third spring member is fixed.
Clause 5. The printer of clause 2, wherein the first spring member is a compression spring.
Clause 6. The printer of clause 2, further comprising a first carrier component with a pocket in which a printhead end of the first spring member sits.
Clause 7. The printer of clause 6, wherein the first carrier component includes a finger tab for enabling a user to manually move the first carrier component, and thereby the first spring member, in the direction across the width of the media path.
Clause 8. The printer of clause 7, wherein the first carrier component has at least one first detent feature and the printhead unit includes at least one second detent feature to provide multiple set positions for the first carrier component and thus the first spring member.
Clause 9. The printer of clause 8, wherein the printhead unit includes a second carrier component and a printhead mounted to the second carrier component, wherein the at least one second detent feature is located on the second carrier component.
Clause 10. The printer of clause 9, further comprising a retainer plate positioned to hold the first carrier component adjacent the second carrier component, the retainer plate overlying part of the first carrier component.
Clause 11. The printer of clause 6, wherein the first spring member is secured to the first carrier component by a fastener.
Clause 12. The printer of clause 11, wherein a portion of the fastener extends through a slot located in the support bracket.
Clause 13. The printer of clause 1, further comprising:
   a printer body, wherein the printhead assembly is pivotably mounted to the printer body.
Clause 14. The printer of clause 1, wherein the printer is formed as a weighing scale that also includes a weighing station for receiving items to be weighed and a load cell for outputting a weight indicative signal.
Clause 15. A printer, comprising:
   a media path along which a media is movable;
   a printhead assembly positioned along the media path at a first side of the media path, wherein the printhead assembly includes a printhead unit;
   a print roller positioned along the media path at a second side of the media path such that media passes between the printhead assembly and the print roller;
   a biasing assembly arranged for biasing the printhead unit toward the print roller, wherein the biasing assembly includes a biasing component that is movable in a direction across a width of the media path in order to laterally shift a zone of biasing pressure that urges the printhead unit toward the print roller as needed to accommodate media of different widths.
Clause 16. The printer of clause 15, wherein the printhead assembly includes a support bracket, wherein the printhead unit is mounted to permit some relative movement between the printhead unit and the support bracket, wherein the biasing component is positioned to bias the printhead unit away from the support bracket, wherein the biasing component comprises a spring member that rides in a movable carrier component.
Clause 17. The printer of clause 16, wherein the carrier component includes a finger tab for enabling a user to manually move the carrier, and thereby the spring member, in the direction across the width of the media path.
Clause 18. The printer of clause 16, wherein the carrier component has at least one first detent feature and the printhead unit includes at least one second detent feature to provide multiple set positions for the carrier component and thus the spring member.
Clause 19. The printer of clause 15, wherein the printer is formed as a weighing scale that also includes a weighing station for receiving items to be weighed and a load cell for outputting a weight indicative signal.

## Claims

1. A printer, comprising:
a media path along which a media is movable;
a printhead assembly positioned along the media path at a first side of the media path;
a print roller positioned along the media path at a second side of the media path such that media passes between the printhead assembly and the print roller;
wherein the printhead assembly includes a printhead unit that is biased toward the print roller by at least a first spring member that is movable in a direction across a width of the media path.

2. The printer of claim 1, wherein the printhead assembly includes a support bracket, wherein the printhead unit is mounted to permit at least some relative movement between the printhead unit and the support bracket, wherein the first spring member is positioned to bias the printhead unit away from the support bracket.

3. The printer of claim 2, further comprising a second spring member positioned to bias the printhead unit away from the support bracket and a third spring member to bias the printhead unit away from the support bracket, wherein the first spring member is disposed laterally between the first spring member and the second spring member, relative to the direction across the width of the media path, and optionally wherein a position of the second spring member is fixed and a position of the third spring member is fixed.

4. The printer of claim 2, wherein the first spring member is a compression spring.

5. The printer of claim 2, further comprising a first carrier component with a pocket in which a printhead end of the first spring member sits.

6. The printer of claim 5, wherein the first carrier component includes a finger tab for enabling a user to manually move the first carrier component, and thereby the first spring member, in the direction across the width of the media path and optionally wherein the first carrier component has at least one first detent feature and the printhead unit includes at least one second detent feature to provide multiple set positions for the first carrier component and thus the first spring member.

7. The printer of claim 6, wherein the printhead unit includes a second carrier component and a printhead mounted to the second carrier component, wherein the at least one second detent feature is located on the second carrier component, and optionally, the printer further comprising a retainer plate positioned to hold the first carrier component adjacent the second carrier component, the retainer plate overlying part of the first carrier component.

8. The printer of claim 5, wherein the first spring member is secured to the first carrier component by a fastener, and optionally wherein a portion of the fastener extends through a slot located in the support bracket.

9. The printer of claim 1, further comprising:
a printer body, wherein the printhead assembly is pivotably mounted to the printer body.

10. The printer of claim 1, wherein the printer is formed as a weighing scale that also includes a weighing station for receiving items to be weighed and a load cell for outputting a weight indicative signal.

11. A printer, comprising:
a media path along which a media is movable;
a printhead assembly positioned along the media path at a first side of the media path, wherein the printhead assembly includes a printhead unit;
a print roller positioned along the media path at a second side of the media path such that media passes between the printhead assembly and the print roller;
a biasing assembly arranged for biasing the printhead unit toward the print roller, wherein the biasing assembly includes a biasing component that is movable in a direction across a width of the media path in order to laterally shift a zone of biasing pressure that urges the printhead unit toward the print roller as needed to accommodate media of different widths.

12. The printer of claim 11, wherein the printhead assembly includes a support bracket, wherein the printhead unit is mounted to permit some relative movement between the printhead unit and the support bracket, wherein the biasing component is positioned to bias the printhead unit away from the support bracket, wherein the biasing component comprises a spring member that rides in a movable carrier component.

13. The printer of claim 12, wherein the carrier component includes a finger tab for enabling a user to manually move the carrier, and thereby the spring member, in the direction across the width of the media path.

14. The printer of claim 12, wherein the carrier component has at least one first detent feature and the printhead unit includes at least one second detent feature to provide multiple set positions for the carrier component and thus the spring member.

15. The printer of claim 11, wherein the printer is formed as a weighing scale that also includes a weighing station for receiving items to be weighed and a load cell for outputting a weight indicative signal.
